# EUROPÄISCHE PATENTSCHRIFT

(11) **EP 0 937 761 B1**
(45) Veröffentlichungstag und Bekanntmachung des Hinweises auf die Patenterteilung: **28.08.2002**
(21) Anmeldenummer: 99102643.6
(22) Anmeldetag: 12.02.1999
(51) Int. Cl.: C09J 7/02, C09J 7/04

(54) **Foggingfreies Klebeband**
Non-fogging adhesive tape
Ruban adhésif n'émettant pas de buée

(30) Priorität: 24.02.1998 DE 19807752
(43) Veröffentlichungstag der Anmeldung: 25.08.1999
(73) Patentinhaber: Tesa AG, 20253 Hamburg (DE)
(72) Erfinder: Harder, Christian Dr., 22589 Hamburg (DE); Zöllner, Stephan Dr., 22089 Hamburg (DE); Sievers, Jürgen, 25451 Quickborn (DE); Dietz, Bernd, 22949 Ammersbek (DE); Ganschow, Frank, 25335 Elmshorn (DE); Kummer, Andreas Dr., 21079 Hamburg (DE)

(56) Entgegenhaltungen:
- EP-A- 0 578 151
- EP-A- 0 621 326
- WO-A-95/18844
- US-A- 5 681 654
- DATABASE RAPRA RAPRA TECHNOLOGY LTD., SHAWBURY, SHREWSBURY, SHROPSHIRE, GB R:426750, XP002102890 & "Specialty Tapes" Adhesive Age 34, No. 8, July 1991, p. 6

## Beschreibung

Die Erfindung betrifft ein foggingfreies Klebeband sowie dessen Verwendung.

Die Prüfung nach der DIN 75 201 dient der Bestimmung des Foggingverhaltens von Werkstoffen, die im Insassenraum von Kraftfahrzeugen verwendet werden. Mit diesem Verfahren kann auch das Foggingverhalten von flüssigen, pastenförmigen, pulverförmigen und festen Rohstoffen bestimmt werden, aus denen die Werkstoffe bestehen beziehungsweise hergestellt werden.

Fogging beschreibt danach die Kondensation von verdampften flüchtigen Bestandteilen aus der Kraftfahrzeug-Innenausstattung an den Glasscheiben, insbesondere an der Windschutzscheibe. Bei ungünstigen Beleuchtungsverhältnissen kann der Fogging-Niederschlag die Sicht durch die Windschutzscheibe beeinträchtigen.

Der Foggingwert F ist gemäß DIN 75 201 der Quotient in Prozent aus dem 60°-Reflektometerwert einer Glasplatte mit Fogging-Niederschlag und dem 60°-Reflektometerwert derselben Glasplatte ohne Fogging-Niederschlag.

Der kondensierbare Bestandteil G ist die Differenz der Wägungen einer Aluminiumfolie mit und ohne Fogging-Niederschlag.

Im folgenden sollen kurz die Verfahren beschrieben werden, die zur Messung des Foggingwertes herangezogen werden.

### Verfahren A:

Der Probekörper beziehungsweise die Probe wird auf den Boden eines Bechers aus Glas ohne Ausguß (im nachfolgenden Text Becher genannt) mit festgelegten Maßen gebracht.

Der Becher wird mit einer Glasplatte abgedeckt, an der flüchtige Bestandteile aus dem Probekörper beziehungsweise der Probe kondensieren können. Diese Glasplatte wird gekühlt.

Der so vorbereitete Becher wird drei Stunden in einen auf Prüftemperatur von (100 ± 0,3) °C befindlichen Badthermostaten hineingestellt.

Die Wirkung des Fogging-Niederschlages auf der Glasplatte wird durch die Messung der 60°-Reflektometerwerte erfaßt. Als Bezug dienen dabei die 60°-Reflektometerwerte derselben Glasplatte ohne Niederschlag, die vor dem Versuch sorgfältig gereinigt wurde.

### Verfahren B:

Der Probekörper beziehungsweise die Probe wird auf den Boden eines Bechers aus Glas ohne Ausguß (im nachfolgenden Text Becher genannt) mit festgelegten Maßen gebracht. Der Becher wird mit einer Aluminiumfolie abgedeckt, an der flüchtige Bestandteile aus dem Probekörper beziehungsweise der Probe kondensieren können. Diese Aluminiumfolie wird gekühlt.

Der so vorbereitete Becher wird 16 h in einen auf Prüftemperatur von (100 ± 0,3) °C befindlichen Badthermostaten hineingestellt.

Die Masse des Fogging-Niederschlages auf der Aluminiumfolie wird quantitativ durch Wägung der Folie vor und nach dem Fogging-Versuch erfaßt.

Die genaue Ausführung der Versuche mitsamt den zu verwendenden Prüfapparaturen ist in der DIN 75201 ausführlich dargelegt.

Die Bestimmung des Foggingverhaltens gewinnt in der Kraftfahrzeugindustrie eine zunehmende Bedeutung, denn die Kunden wünschen aus ökologischen Gesichtspunkten immer häufiger Rohstoffe im Kfz, von denen keine Gesundheitsgefährdung ausgeht.
Auch lassen sich derartige Ausführungen marketingtechnisch sehr gut verwerten.

Auch in der Kraftfahrzeugindustrie existieren viele Prüfmethoden zur Bestimmung des Foggingverhaltens. Alle Prüfmethoden sind dabei in internen Werksnormen niedergelegt, die sich aber mehr oder weniger an die DIN 75201 anlehnen. So erfolgt nach der Volkswagen AG Zentralnorm PV 3015, 55 11 6 "Nichtmetallische Werkstoffe der Innenausstattung; Bestimmung kondensierbarer Bestandteile (G)", erste Veröffentlichung März 1989, die Bestimmung des Foggingkondensatwertes von Werkstoffen der Kraftfahrzeuginnenausstattung, indem der kondensierbare Bestandteil als die Differenz der Wägungen einer Aluminiumfolie mit und ohne Foggingniederschlag bestimmt wird. Dann bestimmt Volvo nach dem "Corporate Standard" STD 1027,2711, veröffentlicht August 1994, de Foggingwert, indem eine saubere Glasscheibe (Grad der Lichtdurchlässigkeit 100%) mit einer durch ausgefoggtes Material belegten Scheibe (Grad der Lichtdurchlässigkeit weniger als 100%) verglichen wird. Des weiteren ist der "Ford Laboratory Test Method" (BO 116-03), veröffentlicht 14. Mai 1990, bekannt, der ebenfalls den ausgefoggten Niederschlag eines Versuchskörpers an einer Scheibe mißt.

Ein Bereich der auf das Foggingverhalten zu überprüfenden Teile eines Kraftfahrzeuges stellen selbstklebende Bänder dar, die beispielsweise zur Ummantelung von Kabelbäumen Verwendung finden.

In der Kabelsatzindustrie ist der Einsatz von Selbstklebebändern weit verbreitet. Je nach Anforderung und Einsatzbereich werden Artikel mit Gewebe, Vlies oder Folien aus unterschiedlichen Materialien eingesetzt. Die Beschichtung dieser Träger mit druckempfindlichen Selbstklebemassen ist bekannt. Erfahrungsgemäß kommen hier sowohl Lösemittelmassen wie auch Hot-Melt-Massen auf Basis von Kunst- oder Naturkautschuk mit Klebeharzen und eventuellen Füllstoffen zum Einsatz.
Diese Art Klebebänder wird in allen Bereichen der Automobile eingebaut (beispielsweise Motorraum oder Innenraum).

Ein alle die bekannten Artikel betreffender Nachteil ist die Ausdunstung von flüchtigen Bestandteilen bei Erwärmung. Dieser Vorgang sorgt im Innenraum der Fahrzeuge für einem Belag auf den Fensterscheiben, so daß eine Beeinträchtigung der Sicht als Sicherheitsrisiko eingestuft wird. Dieser Ausdunstungsvorgang wird, wie bereits oben angedeutet, in der Automobilindustrie "Fogging" genannt.

Weiterhin sind seit langem doppelseitige Klebebänder auf Basis von Acrylatklebmassen bekannt. Für Produkte mit einem ausgewogenen Eigenschaftsprofil werden zumeist in Lösung hergestellte Acrylatpolymere eingesetzt.
Vorteil dieser Vorgehensweise ist es,
a) über gezielte Monomerzusammensetzungen die Masseeigenschaften bezüglich bestimmter Eigenschaftsprofile zu designen,
b) über die Auswahl geeigneter Herstellungsparameter gewünschte Molekulargewichte einzustellen.

Im Hinblick auf die Fragestellung von leichtflüchtigen Bestanteilen weisen diese Massen jedoch alle deutliche Nachteile auf:
a) Mit diesen Massen hergestellte Klebebänder weisen, falls keine exzellente Trocknung durchgeführt wurde, in der Regel Lösungsmittelreste größer 1 Gew.-% auf, die erst mit der Zeit an die Umwelt abgegeben werden. Bei Einsatz empfindlicher Träger beziehungsweise bei dicken Masse-Schichten ist eine 100%ige Trocknung nahezu ausgeschlossen.
   Weiterhin sind bei diesen Massen - insbesondere wenn in dicken Schichten beschichtet - bei unzureichender Trocknung noch Restanteile an nicht umgesetzten Monomeren vorhanden.
b) Die nach standardisierten Polymerisationsverfahren hergestellten Polymere weisen zudem breitere Molmassenverteilungen auf. Dies führt dazu, daß insbesondere die niedermolekularen Bestandteile zum Ausdünsten neigen.

In der US-A- 5,681,654 ("Low fogging pressure-sensitive adhesive") wird ein foggingarmes Selbstklebeband beschrieben. Als Kleber wird die Verwendung einer Kautschukmasse vorgeschlagen, die als Vernetzungssystem eine Schwefel-Basis einsetzt.
Insbesondere beim Kabelbandagieren schützt dieses auch nicht vor Wechselwirkungen mit der PVC Aderisolierung.

Das Klebeband ist nicht foggingfrei sondern lediglich foggingarm.

Der Erfindung liegt die Aufgabe zugrunde, ein foggingfreies Selbstklebeband zu schaffen, das die Nachteile des Standes der Technik nicht oder zumindest nicht in dem Umfang aufweist und das dennoch nicht in seiner Einsatzfähigkeit ähnlich den vorbekannten Produkten eingeschränkt ist.

Zur Lösung dieser Aufgabe schlägt die Erfindung ein foggingfreies Selbstklebeband vor, umfassend einen foggingfreien Träger aus Gewebe, Vliesen, Folien, Papier, Filze, Schaumstoff und Coextrudat auf den zumindest einseitig eine foggingfreie, druckempfindliche Klebemasse auf Acrylathotmelt- Basis mit einem K-Wert von mindestens 20 aufgetragen ist.

Weiterhin vorteilhaft hat sich als Klebemasse eine solche auf Acrylathotmelt-Basis erwiesen, die einen K-Wert größer 30 aufweist (gemessen jeweils in 1 Gew.-%iger Lösung in Toluol, 25°C), erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungs-Extruder bevorzugt.
Eine derartige Klebemasse ist in der deutschen Patentanmeldung DE-A-43 13 008 dargelegt. Diesen auf diesem Wege hergestellten Acrylatmassen wird in einem Zwischenschritt das Lösungsmittel vollständig entzogen.

Der K-Wert wird dabei bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.

Die Lösung der Masse kann 5 - 80 Gew.-%, insbesondere 30 - 70 Gew.-% Lösungsmittel enthalten.

Vorzugsweise werden niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP-A- 0 578 151 A beschrieben.

Die Klebemasse auf Acrylathotmelt-Basis kann UV-vernetzt werden. Andere Vernetzungsarten sind aber auch möglich, zum Beispiel die Elektronenstrahlenvernetzung.

In einer besonders bevorzugten Ausführungsform werden als Selbstklebemassen Copolymerisate aus (Meth)acrylsäure und deren Estern mit 1 - 25 C-Atomen, Malein-, Fumar- und/oder Itaconsäure und/oder deren Estern, substituierten (Meth)acrylamiden, Maleinsäureanhydrid, Vinylestern, insbesondere Vinylacetat, Vinylalkoholen und/oder Vinylethern eingesetzt.

Der Restlösungsmittel-Gehalt sollte unter 1 Gew.-% betragen.

Besonders vorteilhaft läßt sich das erfindungsgemäße Selbstklebeband zur Ummantelung eines Kabelbaums einsetzen, daneben sind insgesamt bevorzugt Einsatzfelder im Automobilbau vorgesehen.

Auch die Verwendung des Selbstklebebandes als beidseitig klebendes Teppichverlegeband zeigt überraschend gute Ergebnisse.

Des weiteren umfaßt der Erfindungsgedanke selbstklebende Bänder, die Beschichtung als medikaler Träger Verwendung finden, so als Trägermaterial für Pflaster oder Bandagen.
Als geeignete Trägermaterialien für die Herstellung von Medizinprodukten zeigen sich Folien, zum Beispiel aus Polypropylen, Polyethylen, Polyester, Gewebe aus Baumwolle, Viskose, Viskoseacetat, Zellwolle, aber auch Vliese aus Viskose oder Polyester sowie anderen Mischungen.

Die erfindungsgemäßen Selbstklebebänder lassen eine Vielzahl von Einsatzfeldem zu, so ein- und doppelseitige Klebebänder, trägerlose Systeme, Pflaster und Etiketten.

Besonders vorteilhaft läßt sich das erfindungsgemäße, einseitig beschichtete Selbstklebeband nach einem Transferverfahren herstellen, wie es in der DE 43 24 748 C2 offenbart ist. Dabei wird die Klebemasse zunächst auf einen Zwischenträger aufgebracht, und zwar einem endlos umlaufenden, antiadhäsiv ausgerüsteten Gurtband. Vom Gurtband wird die derartig hergestellte Schicht an Klebemasse abgenommen und dem Trägermaterial zukaschiert, so daß sich ein einseitiges Klebeband ergibt, das anschließend zu einer Rolle aufgerollt werden kann.

Von der BASF können derartige niedermolekulare Acrylatschmelzhaftklebemassen beispielsweise unter der Bezeichnung Acronal DS 3458 bezogen werden, die aufgrund des Herstellungsprozesses niedrige K-Werte aufweisen.

Aufgrund der geringen K-Werte war zu erwarten, daß die Massen einen hohen Anteil an niedermolekularen Bestandteilen aufweisen, die zu Ausdünstungen führen. Entsprechend lag die Vermutung nahe, daß aufgrund der schwierigen Vernetzbarkeit nicht alle Polymerketten in die Matrix eingebunden werden.

Zur großen Überraschung für den Fachmann zeigte sich, daß diese Massen, wenn sie auf foggingfreie Träger beschichtet und vernetzt werden, gute klebtechnische Eigenschaften und Foggingwerte aufweisen, so zum Beispiel bei der Herstellung von Teppich-Fixen oder als Klebebänder zur Ummantelung von Kabelbäumen.

Einen zusätzlichen und den genannten beschriebenen Effekt positiv beeinflussenden Faktor stellt der äußerst geringe Anteil an migrierenden Bestandteilen in den vernetzten Massesystemen dar (Fogging-Werte von ca. 100).

Im folgenden soll das erfindungsgemäße Klebeband anhand von Beispielen beschrieben werden, ohne damit die Erfindung unnötig einschränken zu wollen.

### Beispiel 1

Auf einen Vliesträger (Maliwatt, 80g/m², Feinheit 22, zum Beispiel von der Fa. Cottano) wird mit einer Rollstabdüse eine UV-vernetzbare Acrylat-Hot-Melt-Klebemasse mit einer Geschwindigkeit von 50 m/min aufgetragen. Dabei wurden zwei unterschiedliche Möglichkeiten der Beschichtung erprobt:

Im ersten Verfahren wurde im Direktstrich 80 g/m² Acronal DS 3458 auf das Vlies aufgetragen. Die Temperatur der Klebemasse betrug 90°C bis 110°C, und die Streichunterwelle wurde temperiert.

Nach der zweiten Versuchsvariante wurde 50 g/m² Acronal 3458 auf ein Gurtband beschichtet und in einer temperierbaren Kaschierstation die Klebmasse mit 80 °C und einem Druck von 8 bar auf den Vliesträger transferiert. Diese Variante ließ eine besonders komfortable Steuerung der Verankerung der Klebmasse auf dem Trägermaterial unter Vermeidung eines unzulässigen Massedurchschlags zu.

Beide Varianten wurden im weiteren Bahnverlauf der Anlage mit UV-Strahlern vernetzt (6 Mitteldruck Hg-Lampen à 120 W/cm). Der Vernetzungsgrad konnte über die UV-Dosis variabel eingestellt werden, so daß die klebtechnischen Eigenschaften (u.a. Klebkraft, Abrollkraft) individuell eingestellt werden konnten.

Beide Varianten wurden an einem Stangenwickler zu den gewünschten Längen auf Stangen aufgewickelt und an einem Abstechautomaten zu den gewünschten Breiten konfektioniert.

Die klebtechnischen Daten eines derartigen Artikels sahen aus wie folgt:

| | |
|---|---|
| Klebkraft auf Stahl: | 3,4 N/cm |
| Klebkraft auf der Rückseite: | 4,1 N/cm |
| Abrollkraft bei 0,3 m/min: | 2,6 N/cm |
| Höchstzugkraft: | 50,2 N/cm |
| HZK-Dehnung | 14,2 % |

Die Messung der Klebkräfte erfolgte durch Abziehen der Klebebänder unter einem Abzugswinkel von 180° und einer Abzugsgeschwindigkeit von 300 mm/min.

### Foggingwert:

| | |
|---|---|
| nach Ford FLTM BO 116-03 | 100% |
| nach Volvo STD1027,2711 | 100% |
| nach VW - PV 3015 | 0,3 mg (Soll <3 mg) |

Der Foggingwert wird dabei folgendermaßen ermittelt:

Eine festgelegte Menge Klebeband wird im Wasserbad in einem abgeschlossenen Behälter über einen festgelegten Zeitraum einer festgelegten Temperatur ausgesetzt. Auf der Glasplatte, mit der der Behälter geschlossen wird, setzt sich bei diesem Vorgang ein Niederschlag ab, der die Lichtdurchlässigkeit der Glasplatte verändert. Der Grad der Lichtdurchlässigkeit wird in % angegeben.

Somit ist ein Foggingwert von 10, gleichbedeutend mit einer nur noch 10%igen Lichtdurchlässigkeit der Glasplatte und damit ein schlechter Foggingwert. Dem entgegen ist ein Foggingwert von 100 natürlich als optimal zu bezeichnen, da keine meßbaren Ausdünstungen vorhanden sind und ein solcher Artikel als foggingfrei zu bezeichnen ist.

Die Foggingprüfung wird in der Automobilindustrie immer mehr als Freigabekriterium gefordert, das das erfindungsgemäße Klebeband erfüllt.

Das so gefertigte Klebeband ist als besonders stabiles Kabelsatzklebeband zu bezeichnen. Die Stabilität der klebtechnischen Daten ist auch nach Temperaturlagerung gewährleistet.

Im Gegensatz zu Kautschukklebemassen findet keine Verlackung statt.
Auch eine Wechselwirkung zu dem Aderisolationsmaterial PVC findet nicht statt.

### Beispiel 2

Auf einen Pflasterfolienträger (Polyolefin mit einer flächenspezifischen Masse von 56 g/m²) wird mit einer Rollstabdüse bei einer Geschwindigkeit von 80 m/min eine UVvemetzbare Acrylat-Hot-Melt-Klebemasse aufgetragen.

Auf die Folie wurden 38 g/m² der UV-vernetzbaren Acrylat-Hot-Melt-Klebemasse Acronal DS 3458 mittels einer Rollstabdüse aufbracht. Die Temperatur der Klebemasse betrug 145°C. Eine ausreichende Verankerung auf dem Träger wurde durch eine Temperierung der Streichunterwelle gewährleistet. Das beschichtete Material wurde durch Bestrahlung mit ultraviolettem Licht von vier Mitteldruck Hg-Strahlern à 120 W/cm vernetzt. Über die UV-Dosis konnte der Vernetzungsgrad variabel eingestellt werden, so daß die entsprechenden klebtechnischen Eigenschaften (u.a. Klebkraft, Abrollkraft) individuell eingestellt werden konnten.

Die beschichtete Folie wurde mit einem silikonisierten Papier kaschiert, zu einem Ballen gewickelt und zu Rollen weiterverarbeitet.

Die klebtechnischen Daten der beschichteten Folie ergaben sich zu:

| | |
|---|---|
| Kiebkraft auf Stahl: | 3,3 N/cm |
| Gelwert (Extraktion mit Toluol) | 50 % |

### Foggingwert:

| | |
|---|---|
| SAE J 1756 pt.6 (= DIN 75201 Verf. A) | 84 [Fogging No.] |
| | |
| SAE J 1756 pt.9 (= DIN 75201 Verf. B) | 0,2 [mg] |

Der Foggingwert wird, wie in Bespiel 1 beschrieben ermittelt.

Auch dieses Material weist bei reduzierter Vernetzungsdosis einen guten Fogging-Wert auf. Das Material läßt sich ohne Rückstände zu hinterlassen von dem zur Verklebung genutzten Hautareal wieder entfernen.

### Beispiel 3

In der folgenden Tabelle sind zwei weitere Ausführungsbeispiele der erfindungsgemäßen Klebebänder angegeben, und zwar Teppichverlegebänder.

| Muster | **4** | **6** |
|---|---|---|
| Träger | Polypropylen weiß, 50 µm | |
| Vorbehandlung | Primer | |
| Trennpapier | weißes Trennpapier 80 g/m² | |
| Masse abgedeckte Seite ⇒ Masse zum Teppich | Acronal DS 3458 | |
| Masse offene Seite ⇒ Masse zum Untergrund | DS 3458 für glatte Untergründe wie z.B. Parkett, PVC-Böden | DS 3458 für rauhe Untergründe wie z.B. Estrich |
| Beschichtungsgeschwindigkeit | 40 m/min | 40 m/min |
| Bestrahlungsleistung | 720 Watt | 720 Watt |
| Auftragsgewicht | 40 g/m² | 73 g/m² |
| | | |
| **Klebkraft auf Stahl** | | |
| | 2,9 N/cm | 4,3 N/cm |

Zur Feststellung der Eigenschaften des verklebten Klebebandes beim Ablösen wurde dieses auf PVC verklebt und für drei Tage bei 40 °C in einem Trockenschrank gelagert.

Die verklebten Abschnitte wurden unter verschiedenen Abzugswinkeln bei unterschiedlichen Geschwindigkeiten vom Untergrund abgezogen (siehe anschließende Tabelle).

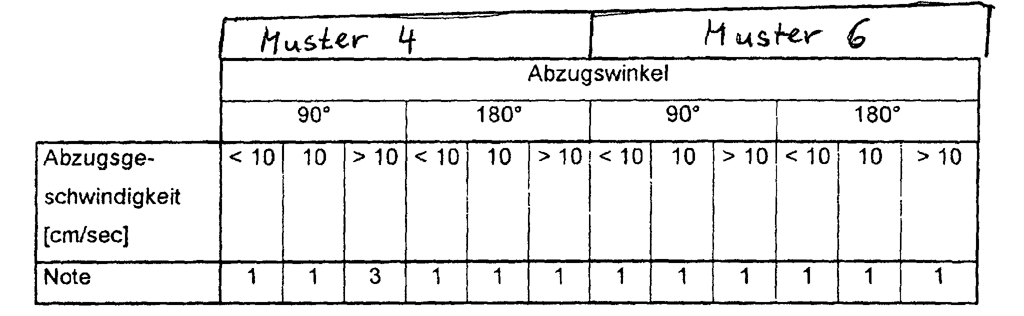

Für die aufgeführten Noten gilt der folgende Schlüssel:

| **Note** | **Masserückstände in %*** |
|---|---|
| 1 | keine Rückstände |
| 2 | <10 |
| | (vereinzelt Massepunkte) |
| 3 | 10 - 30 |
| 4 | 31 - 50 |
| 5 | 51 - 100 |

| | |
|---|---|
| *: bezogen auf die gesamte Verklebungsfläche | |

Auch die hier beschriebenen foggingfreien Selbstklebebänder weisen nach den bekannten Methoden lediglich minimale bis überwiegend keine Masserückstände auf, wie aus der obigen Tabelle deutlich wird. Dadurch, daß kein Fogging bei den erfindungsgemäßen Klebebändern auftritt, kann man diese Selbstklebebänder weitgehend rückstandsfrei auch von schwierigen Untergründen wieder aufnehmen.

## Patentansprüche

1. Foggingfreies Selbstklebeband, umfassend einen foggingfreien Träger aus Gewebe, Vliesen, Folien, Papier, Filze, Schaumstoff und Coextrudat, auf den zumindest einseitig eine foggingfreie, druckempfindliche Klebemasse auf Acrylathotmelt-Basis mit einem K-Wert von mindestens 20 aufgetragen ist.

2. Selbstklebeband nach Anspruch 1, **dadurch gekennzeichnet, daß** als Klebemasse eine solche auf Acrylathotmelt-Basis eingesetzt ist, die einen K-Wert größer 30 aufweist.

3. Selbstklebeband nach den Ansprüchen 1 und 2, **dadurch gekennzeichnet, daß** in die Klebemasse auf Acrylathotmelt-Basis Benzoinderivate einpolymerisiert sind.

4. Selbstklebeband nach den Ansprüchen 1 bis 3, **dadurch gekennzeichnet, daß** die Klebemasse auf Acrylathotmelt-Basis strahlenchemisch vemetzt ist.

5. Selbstklebeband nach den Ansprüchen 1 bis 4, **dadurch gekennzeichnet, daß** als Selbstklebemassen Copolymerisate aus (Meth)acrylsäure und deren Estem mit 1 - 25 C-Atomen, Malein-, Fumar- und/oder Itaconsäura und/oder deren Estem, substituierten (Meth)acrylamiden, Maleinsäureanhydrid und Vinylestem, Vinylalkoholen und/oder Vinylethern eingesetzt werden.

6. Selbstklebeband nach den Ansprüchen 1 bis 5, **dadurch gekennzeichnet, daß** der Restlösungsmittel-Gehalt unter 1 Gew.-% beträgt.

7. Verfahren zur Herstellung eines einseitig beschichteten Selbstklebebandes nach einem der Ansprüche 1 bis 6, wobei die Klebemasse zunächst auf einen Zwischenträger aufgebracht wird, insbesondere einem endlos umlaufenden, antiadhäsiv ausgerüsteten Gurtband, die derartig hergestellte Schicht an Klebemasse vom Gurtband abgenommen und dem Trägermaterial zukaschiert wird.

8. Verfahren zur Herstellung eines zumindest einseitig beschichteten Selbstklebebandes nach einem der Ansprüche 1 bis 6, wobei die Klebmasse durch Aufkonzentrieren einer Lösung einer solchen Masse zu einem als Hotmelt verarbeitbaren System erhalten wird.

9. Verfahren nach Anspruch 8, **dadurch gekennzeichnet, daß** die Lösung der Masse 5 -80 Gew.-% Lösungsmittel enthält.

10. Verfahren nach den Ansprüchen 8 und 9, **dadurch gekennzeichnet, daß** als Lösungsmittel niedrig siedende Kohlenwasserstoffe, Ketone, Alkohole und/oder Ester eingesetzt werden.

11. Verfahren nach den Ansprüchan 8 bis 10, **dadurch gekennzeichnet, daß** Einschnecken-, Zweischnecken- oder Mehrschneckenextruder mit einer, zwei oder mehreren Entgasungseinheiten eingesetzt werden.

12. Verwendung eines Selbstklebebandes nach mindestens einem der Ansprüche 1 bis 6 zur Ummantelung eines Kabelbaums,

13. Verwendung eines Selbstklebebandes nach einem der Ansprüche 1 bis 6 als beidseitig klebendes Teppichverlegeband.

14. Verwendung eines Selbstklebebandes nach einem der Ansprüche 1 bis 6 als medizinischen Träger.

## Claims

1. Non-fogging self-adhesive tape comprising a non-fogging backing, composed of wovens, nonwovens, films, paper, felts, foams and coextrudates, to at least one side of which a non-fogging, pressure-sensitive adhesive composition based on an acrylate hotmelt having a K value of at least 20 has been applied.

2. Self-adhesive tape according to Claim 1, **characterized in that** the adhesive composition employed is based on an acrylate hotmelt and has a K value of more than 30.

3. Self-adhesive tape according to Claims 1 and 2, **characterized in that** benzoin derivatives are incorporated by polymerization into the adhesive composition based on acrylate hotmelt.

4. Self-adhesive tape according to Claims 1 to 3, **characterized in that** the adhesive composition based on acrylate hotmelt is crosslinked chemically by means of radiation.

5. Self-adhesive tape according to Claims 1 to 4, **characterized in that** the self-adhesive compositions employed are copolymers of (meth)acrylic acid and esters thereof with 1-25 carbon atoms, maleic, fumaric and/or itaconic acid and/or their esters, substituted (meth)acrylamides, maleic anhydride and vinyl esters, vinyl alcohols and/or vinyl ethers.

6. Self-adhesive tape according to Claims 1 to 5, **characterized in that** the residual solvent content is below 1% by weight.

7. Process for producing a self-adhesive tape coated on one side according to one of Claims 1 to 6, where the adhesive composition is first of all applied to an intermediate backing, in particular an endlessly circulating, anti-adhesively treated carrier tape and the layer of adhesive composition prepared in this way is removed from the carrier tape and laminated to the backing material.

8. Process for producing a self-adhesive tape coated on at least one side according to one of Claims 1 to 6, where the adhesive composition is obtained by concentrating a solution of such a composition to give a system which can be processed as a hotmelt.

9. Process according to Claim 8, **characterized in that** the solution of the composition comprises 5 - 80% by weight of solvent.

10. Proccess according to Claims 8 and 9, **characterized in that** the solvents employed are low-boiling hydrocarbons, ketones, alcohols and/or esters.

11. Process according to Claims 8 to 10, **characterized in that** single-screw, twinscrew or multi-screw extruders having one, two or more devolatilizing units are employed.

12. Use of a self-adhesive tape according to at least one of Claims 1 to 6 for bandaging a cable harness.

13. Use of a self-adhesive tape according to one of Claims 1 to 6 as a double-sided adhesive carpet laying tape.

14. Use of a self-adhesive tape according to one of Claims 1 to 6 as a medical backing.

## Revendications

1. Ruban autoadhésif sans formation de voile, comprenant un support sans formation de voile, à base de tissus, non-tissés, pellicules, papier, feutres, mousse ou co-extrudat, sur lequel est appliquée au moins d'un côté une matière adhésive sensible à la pression, sans formation de voile, à base d'une colle fusible acrylate ayant un indice K d'au moins 20.

2. Ruban autoadhésif selon la revendication 1, **caractérisé en ce qu'**on utilise comme matière adhésive une telle matière adhésive à base de colle fusible acrylate, qui présente un indice K supérieur à 30.

3. Ruban autoadhésif selon les revendications 1 et 2, **caractérisé en ce que** des dérivés de benzoïne sont copolymérisés dans la matière adhésive à base de colle fusible acrylate.

4. Ruban autoadhésif selon les revendications 1 à 3, **caractérisé en ce que** la matière adhésive à base de colle fusible acrylate est réticulée chimiquement par irradiation.

5. Ruban autoadhésif selon les revendications 1 à 4, **caractérisé en ce qu'**on utilise comme matières autoadhésives des copolymères d'acide (méth)acrylique et leurs esters ayant de 1 à 25 atomes de carbone, d'acides maléique, fumarique et/ou itaconique et/ou leurs esters, de (méth)acrylamides substitués, d'anhydride maléique et d'esters vinyliques, d'alcools vinyliques et/ou d'éthers vinyliques.

6. Ruban autoadhésif selon les revendications 1 à 5, **caractérisé en ce que** la teneur en solvant résiduel est inférieure à 1 % en poids.

7. Procédé pour la fabrication d'un ruban autoadhésif revêtu d'un côté, selon l'une quelconque des revendications 1 à 6, dans lequel la matière adhésive est d'abord appliquée sur un support intermédiaire, en particulier une courroie transporteuse rotative sans fin munie d'un antiadhésif, la couche de matière adhésive ainsi préparée est retirée de la courroie transporteuse et contrecollée sur le matériau de support.

8. Procédé pour la fabrication d'un ruban autoadhésif au moins revêtu d'un côté, selon l'une quelconque des revendications 1 à 6, dans lequel la matière adhésive est obtenue par concentration d'une solution d'une telle matière en un système pouvant être mis en oeuvre en tant que colle fusible.

9. Procédé selon la revendication 8, **caractérisé en ce que** la solution de la matière contient de 5 à 80 % en poids de solvant.

10. Procédé selon les revendications 8 et 9, **caractérisé en ce qu'**on utilise comme solvant des hydrocarbures à bas point d'ébullition, des cétones, des alcools et/ou des esters.

11. Procédé selon les revendications 8 à 10, **caractérisé en ce qu'**on utilise des extrudeuses monovis, double vis ou multivis comportant une, deux ou plus de deux unités de dégazage.

12. Utilisation d'un ruban autoadhésif selon au moins l'une quelconque des revendications 1 à 6, pour envelopper un faisceau de câbles.

13. Utilisation d'un ruban autoadhésif selon l'une quelconque des revendications 1 à 6, en tant que ruban adhésif double face pour pose de moquette.

14. Utilisation d'un ruban autoadhésif selon l'une quelconque des revendications 1 à 6, en tant que support médical.
